# EUROPEAN PATENT APPLICATION

(11) **EP 3 723 067 A1**
(43) Date of publication of application: **14.10.2020**
(21) Application number: 20168331.5
(22) Date of filing: 06.04.2020
(51) Int. Cl.: G08G 5/00, G08G 5/02, G06N 20/00, G06N 7/00

(54) **SYSTEMS AND METHODS FOR PREDICTING FLIGHT SAFETY EVENTS USING A LEARNING-BASED MODEL**

(30) Priority: 05.04.2019 IN 201941013911; 02.04.2020 US 202016838182
(71) Applicant: Honeywell International Inc., Morris Plains, NJ 07950 (US)
(72) Inventor: KHAN, Kalimulla, Morris Plains, NJ New Jersey 07950 (US); JAYATHIRTHA, Srihari, Morris Plains, NJ New Jersey 07950 (US); LETSU-DAKE, Emmanuel, Morris Plains, NJ New Jersey 07950 (US)
(74) Representative: Haseltine Lake Kempner LLP

(57) **Abstract**

Systems and methods for predicting flight safety events using a learning-based model are disclosed. The method may include: receiving, by a processor, flight data from an aircraft and contextual information of a flight for the aircraft; identifying, by the processor, patterns in the received flight data and contextual information that correspond to a specific type of event that occurred during the flight; computing, by the processor, a probability of an occurrence of an event for the flight based on the identified patterns in the received flight data and contextual information; and sending, by the processor, an alert to the aircraft when the computed probability of an occurrence of an event is above a predetermined threshold.

## Description

### TECHNICAL FIELD

Various embodiments of the present disclosure relate generally to flight data monitoring systems, and more specifically, to systems and methods for predicting flight safety events using a learning-based model on a flight data monitoring system.

### BACKGROUND

Flight data monitoring (FDM) systems process flight data from line operations and detect events based on standard definitions of flight safety events. For example, a specific combination of flight energy state and environmental conditions for a specific type of aircraft may contribute to a respective aircraft encountering a specific event. Further, various factors, such as environmental conditions, energy states, and/or flight progress data, may contribute to the occurrence of an event. For example, the probability of encountering an unstable approach may vary for a specific flight based on winds, visibility, weather conditions, type of approach flown, airport procedures, air traffic control (ATC), etc. Current flight safety systems may be reactive and identify the corrective actions and mitigation of risks in the airline operations after the event has occurred. Thus, current flight safety systems may lack a capability to predict events and provide timely alerts to avert safety events.

The present disclosure is directed to overcoming one or more of these above-referenced challenges.

### SUMMARY OF THE DISCLOSURE

In one embodiment, a computer-implemented method for predicting flight safety events using a learning-based model is disclosed. The method may include: receiving, by a processor, flight data from an aircraft and contextual information of a flight for the aircraft; identifying, by the processor, patterns in the received flight data and contextual information that correspond to a specific type of event that occurred during the flight; computing, by the processor, a probability of an occurrence of an event for the flight based on the identified patterns in the received flight data and contextual information; and sending, by the processor, an alert to the aircraft when the computed probability of an occurrence of an event is above a predetermined threshold.

According to another aspect of the disclosure, a computer system for predicting flight safety events using a learning-based model may include at least one memory having processor-readable instructions stored therein; and at least one processor configured to access the memory and execute the processor-readable instructions, which when executed by the processor configures the processor to perform a plurality of functions. The functions may comprise receiving flight data from an aircraft and contextual information of a flight for the aircraft; identifying patterns in the received flight data and contextual information that correspond to a specific type of event that occurred during the flight; computing a probability of an occurrence of an event for the flight based on the identified patterns in the received flight data and contextual information; and sending an alert to the aircraft when the computed probability of an occurrence of an event is above a predetermined threshold.

According to still another aspect of the disclosure, a non-transitory computer-readable medium comprising instructions for predicting flight safety events using a learning-based model, the non-transitory computer-readable medium storing instructions that, when executed by at least one processor, may configure the at least one processor to perform receiving flight data from an aircraft and contextual information of a flight for the aircraft; identifying patterns in the received flight data and contextual information that correspond to a specific type of event that occurred during the flight; computing a probability of an occurrence of an event for the flight based on the identified patterns in the received flight data and contextual information; and sending an alert to the aircraft when the computed probability of an occurrence of an event is above a predetermined threshold.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts a block diagram of an exemplary system for predicting flight safety events using a learning-based model, according to aspects of the disclosure.
FIG. 2 depicts a flow diagram of a method for predicting flight safety events using a learning-based model.
FIG. 3 depicts an example system that may execute techniques presented herein.

### DETAILED DESCRIPTION

The following embodiments describe systems and methods for predicting flight safety events using a learning-based model. Embodiments of the present disclosure may provide for receiving real-time information of the current aircraft energy state, flight progressive data, contextual information, forecasted conditions. The system may perform predictive analytics using historic data of flight events encountered and predict probability of the occurrence of a specific type of a flight event or exceedance. The system may perform such analytics and provides predictive advisories of higher risks to flight safety which crew can strategically incorporate to minimize the risk. As such, the system of the present disclosure may enable airlines to predict the flight safety risks during dispatch as well as in-air and take corrective actions without impacting the safety of the flight.

Further, there exist commonalities in situations/scenarios in flights when an event occurs. For example, a specific combination of flight energy state and environmental conditions for a specific aircraft type may contribute to a respective aircraft encountering a specific event. As such, there may be a correlation between various factors, such as environmental conditions, energy states, and/or flight progress data, in the occurrence of an event. For example, the probability of encountering an unstable approach may vary for a specific flight based on winds, visibility, weather conditions, type of approach flown, airport procedures, air traffic control (ATC), etc. Thus, the probability of encountering unstable approach may be predictable based on the combinations of the factors detailed above.

The subject matter of the present disclosure will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

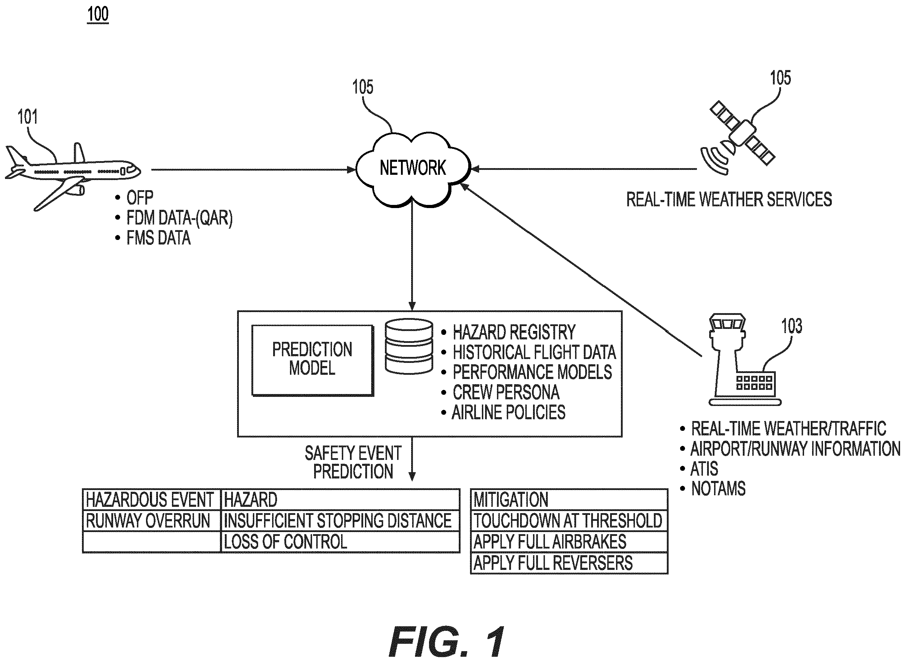

Referring now to the appended drawings, FIG. 1 depicts a block diagram of an exemplary system 100 for predicting flight safety events using a learning-based model, according to aspects of the disclosure. As shown in FIG. 1, system 100 may include one or more vehicles 101, such as an aircraft, one or more ground stations 103, and one or more satellites 102 all in communication via a network 105. The network 105 may be a cloud-based network and may include, for example, the Internet. The vehicle 101 may include one or more avionics systems, such as a quick access recorder (QAR) and/or a flight management system (FMS), for collecting trip data (e.g., flight data) during a trip of the vehicle (e.g., during a flight of an aircraft). In one embodiment, the vehicle 101 may collect flight path data (OFP), flight data management (FDM) data (via the QAR), and/or FMS data. The ground station 103 may include one or more systems for collecting and sending data to the cloud-based network. The data of the ground station 103 may include, for example, real-time weather and/or traffic, airport and runway information, terminal information (via an automatic terminal information service), and notice to airmen (NOTAM) data. The satellite 102 may include, for example, a weather satellite for sending real-time weather data to the cloud-based network.

A processor of the ground station 103 (via the network) may receive signals containing data, such as trip data, from the vehicle during a trip or after a trip (e.g., during a flight of an aircraft or post-flight). The processor of the ground station 103 may also receive contextual information, such as traffic, weather, runway, restrictions, communications with air traffic control (ATC) and AOC data. System 100 may also compute a plurality of received data sets to generate derived parameters according to specific requirements. For example, the data may include:
i. Flight data repository (e.g., QAR data and/or flight data recorder data) which may include aircraft state, systems data, flight path, and/or configuration. The source may be operator specific or sources from global flight data exchange programs.
ii. Navigation and procedures (e.g., flight plan, SID/STAR/Approach/Runway) related information.
iii. Aircraft historic maintenance information.
iv. Air traffic data feeds and/or terminal arrival forecasts.
v. Contextual information (e.g., current and forecasted weather and wind)
vi. Airport/runway data (e.g., visibility, surface condition, runway length, contamination, etc.).
vii. Air traffic information and/or NOTAMs.
viii. Avionics data source. For example, various LRUs on-board including to EGPWS, Flight Management System (e.g., FMS, flight plan, flight trajectory predictions information, etc.).

The ground station 103 may further include one or more databases, such as a master database, for storing flight safety event definitions. The one or more databases may be located at the ground station 103 or may be stored and accessed via the cloud-based network. The flight safety event definitions may be updated and filtered for a specific flight and acts related to the flight. A processor of system 100 may predict potential events to the safe operation of the aircraft considering the flight data parameters for a specific flight situation. For example, the processor may be located on-board the vehicle 101, at the ground station 103, or in the cloud-based network 105.

The processor may utilize a machine learning (ML) model that may take the flight data and relevant contextual information, both at the current location and down path of the aircraft, and identify if the received data correlates with patterns and situations under which a specific type of event has occurred in the historic data related to specific events. The processor may also use the patterns and precursors to perform a what-if analysis to predict probability of occurrence of the events. For example, the processor may predict how close the current or forthcoming operational events may occur for a specific flight operational situation. When the probability of the occurrence of the specific flight event is high, the processor may issue a specific advisory to the crew and various stakeholders of the specific flight. The specific advisory may include information of the high probability of the occurrence of the specific flight event and the attributes of the predicted event. The specific advisory may further include the location or forecasted situation where the probability of the specific event occurrence is very high.

The ground station 103 may include one more databases located at the ground station or in the cloud-based network. The one or more databases may store historical flight data (e.g., including flight information and contextual information), hazard and events, performance model, crew information and airline policies and standards. When the airline has a large enough data store, the processor (via the machine learning model) may compute the sensitivity of hazards with flight data and store the computed sensitivity of hazards in the prediction model. The prediction model may be refined periodically to ensure the predictions are current with line operations. On the day of the flight or during the flight, own-ship information (e.g., operational flight plan, QAR, and avionics information) and contextual information (e.g., real-time weather/traffic, airport information, etc.) may be processed with the prediction model to predict any possibility of occurrence of a hazard or an event.

An exemplary safety event prediction (computed by the processor of system 100) is further shown in FIG. 1. The safety event prediction may include displaying the hazardous event, the hazard, and any mitigation suggestions. In the exemplary embodiment, the hazardous event may include runway overrun, the hazard may include insufficient stopping distance and loss of control, and the mitigation suggestions may include touchdown at threshold, apply full airbrakes, and apply full reversers.

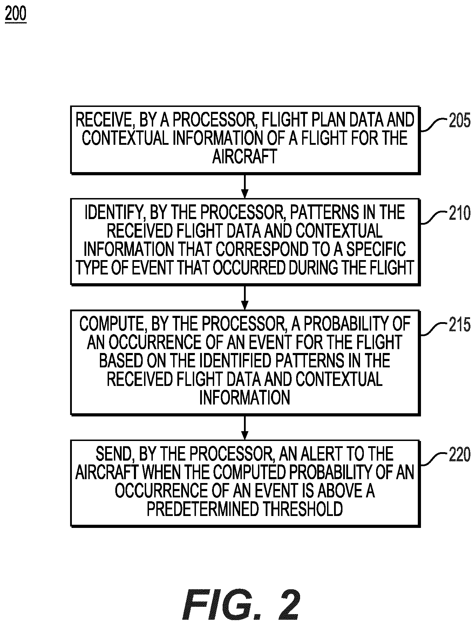

FIG. 2 depicts a flow diagram of a method 200 for predicting flight safety events using a learning-based model. In an initial step 205, a processor may receive flight data from an aircraft and contextual information of a flight for the aircraft. The contextual information may include, for example, traffic information, weather information, runway information, restrictions, and/or communications with ATC or AOC.

In step 210, the processor may identify patterns in the received flight data and contextual information that correspond to a specific type of event that occurred during the flight.

In step 215, the processor may compute a probability of an occurrence of an event for the flight based on the identified patterns in the received flight data and contextual information.

In step 220, the processor may send an alert to the aircraft when the computed probability of an occurrence of an event is above a predetermined threshold. For example, the processor may send an alert when the probability of an event occurring is high.

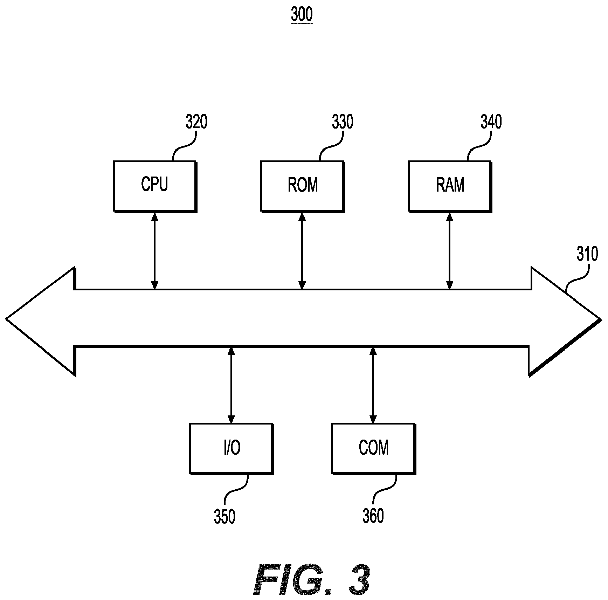

FIG. 3 depicts an example system 300 that may execute techniques presented herein. FIG. 3 is a simplified functional block diagram of a computer that may be configured to execute techniques described herein, according to exemplary embodiments of the present disclosure. Specifically, the computer (or "platform" as it may not a be a single physical computer infrastructure) may include a data communication interface 360 for packet data communication. The platform also may include a central processing unit ("CPU") 320, in the form of one or more processors, for executing program instructions. The platform may include an internal communication bus 310, and the platform also may include a program storage and/or a data storage for various data files to be processed and/or communicated by the platform such as ROM 330 and RAM 340, although the system 300 may receive programming and data via network communications. The system 300 also may include input and output ports 350 to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

The general discussion of this disclosure provides a brief, general description of a suitable computing environment in which the present disclosure may be implemented. In one embodiment, any of the disclosed systems, methods, and/or graphical user interfaces may be executed by or implemented by a computing system consistent with or similar to that depicted and/or explained in this disclosure. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure also may be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. A computer-implemented method for predicting flight safety events using a learning-based model, the method comprising:
receiving, by a processor, flight data from an aircraft and contextual information of a flight for the aircraft;
identifying, by the processor, patterns in the received flight data and contextual information that correspond to a specific type of event that occurred during the flight;
computing, by the processor, a probability of an occurrence of an event for the flight based on the identified patterns in the received flight data and contextual information; and
sending, by the processor, an alert to the aircraft when the computed probability of an occurrence of an event is above a predetermined threshold.

2. The method of claim 1, wherein the identifying patterns comprises utilizing a machine learning model.

3. The method of claim 2, wherein the machine learning model is a prediction model, and further comprise training the prediction model based on predetermined intervals.

4. The method of claim 1, wherein the contextual information include at least one of traffic data, weather data, runway data, restrictions data, and communications with air traffic control (ATC).

5. The method of claim 1, wherein the flight data include at least one of flight path data, flight data management (FDM) data, flight management system (FMS) data, and quick access recorder (QAR) data.

6. The method of claim 1, wherein the event is an occurrence of a hazard event, and the alert includes the hazard and mitigation suggestions.

7. The method of claim 6, wherein the hazard is at least one of insufficient stopping distance and loss of control.

8. A computer system for predicting flight safety events using a learning-based model, the computer system comprising:
at least one memory having processor-readable instructions stored therein; and
at least one processor configured to access the memory and execute the processor-readable instructions, which when executed by the processor configured the processor to perform a plurality of functions, including functions for:
receiving flight data from an aircraft and contextual information of a flight for the aircraft;
identifying patterns in the received flight data and contextual information that correspond to a specific type of event that occurred during the flight;
computing a probability of an occurrence of an event for the flight based on the identified patterns in the received flight data and contextual information; and
sending an alert to the aircraft when the computed probability of an occurrence of an event is above a predetermined threshold.

9. The system of claim 8, wherein the function of identifying patterns further comprise utilizing a machine learning model.

10. The system of claim 9, wherein the machine learning model is a prediction model, and further includes the function of training prediction model based on predetermined intervals.

11. The system of claim 8, wherein the contextual information include at least one of traffic data, weather data, runway data, restrictions data, and communications with air traffic control (ATC).

12. The system of claim 8, wherein the flight data include at least one of flight path data, flight data management (FDM) data, flight management system (FMS) data, and quick access recorder (QAR) data.

13. The system of claim 8, wherein the event is an occurrence of a hazard event, and the alert includes the hazard and mitigation suggestions.

14. The system of claim 13, wherein the hazard is at least one of insufficient stopping distance and loss of control.
